Europäisches Patentamt

European Patent Office

Office européen des brevets

(11) Publication number: **0 340 173**
**A1**

## (12) EUROPEAN PATENT APPLICATION

(21) Application number: **89830080.1**

(22) Date of filing: **28.02.89**

(51) Int. Cl.⁴: **B 60 T 13/46**
**B 60 T 17/02, F 16 K 17/04**

(30) Priority: **02.03.88 IT 6716588**

(43) Date of publication of application:
**02.11.89 Bulletin 89/44**

(84) Designated Contracting States:
**AT BE DE ES FR GB IT NL SE**

(71) Applicant: **INDUSTRIE MAGNETI MARELLI S.r.l.**
**Via Adriano 81**
**I-20128 Milano (IT)**

(72) Inventor: **Giupponi, Alessandro**
**Via Umberto I, 117**
**I-24050 Morengo (Bergamo) (IT)**

**Da Tos, Paolo**
**Via Costantino Baroni, 140**
**I-20142 Milano (IT)**

(74) Representative: **Quinterno, Giuseppe et al**
**c/o Jacobacci-Casetta & Perani S.p.A. Via Alfieri, 17**
**I-10121 Torino (IT)**

(54) **A vacuum limiting device.**

(57) The device comprises a body (1, 2) with first and second apertures (3, 4) which can communicate with each other through a chamber (8, 9) defined in the body and are intended for connection to a vacuum source and an accumulator or other vacuum-using device, respectively. The body also has a third aperture (19) through which the chamber (8, 9) communicates with the atmosphere. An on-off valve (11, 13) is formed in the chamber (8, 9) for interrupting the communication between the first and second apertures (3, 4). This valve (11, 13) comprises a seat (11) and a movable obturator (13) controlled by an operating piston (10) which is slidable in the chamber (8, 9) and sealingly separates the first and second apertures (3, 4) from the third aperture (19). The piston (10) is adapted to close the valve (11, 13) against the action of resilient biassing means (18) which tend to open the valve (11, 13) when the vacuum applied to the second aperture (4) of the body exceeds a predetermined value.

FIG. 1

EP 0 340 173 A1

Bundesdruckerei Berlin

## Description

### A vacuum limiting device

The present invention relates to a vacuum limiting device.

Limiting devices are known which operate automatically, when the vacuum in a particular environment exceeds a predetermined threshold, to put the environment into communication with the atmosphere. An air flow thus enters the environment, reducing the vacuum therein to a value below the threshold.

The object of the present invention is to produce a device which enables the vacuum in a particular environment to be limited without the need to put the environment into communication with the atmosphere for this purpose.

This object is achieved according to the invention by means of a vacuum limiting device characterised in that it includes a body with first and second apertures which can communicate with each other through a chamber defined in the body and are intended to be connected to a vacuum source and to an accumulator or vacuum user respectively, and with a third aperture through which the chamber communicates with the atmosphere; an on-off valve being provided in the chamber for interrupting the communication between the first and second apertures, the valve comprising a seat and a movable obturator controlled by an operating piston which is slidable in the chamber and sealingly separates the first and second apertures from the third aperture of the body, the piston being adapted to close the valve against the action of resilient biasing means which tend to open the valve, when the vacuum applied to the second aperture exceeds a predetermined value.

The vacuum limiting device according to the invention can conveniently be used, for example, in vacuum servobraking systems, in pneumo-hydraulic anti-skid braking systems, etc.

Further characteristics and advantages of the present invention will become clear from the detailed description which follows with reference to the appended drawings, provided by way of non-limiting example, in which

Figures 1 and 2 are sectional views of a device according to the invention in first and second operating conditions respectively, and

Figure 3 is a sectional view of another device according to the invention, including a check valve.

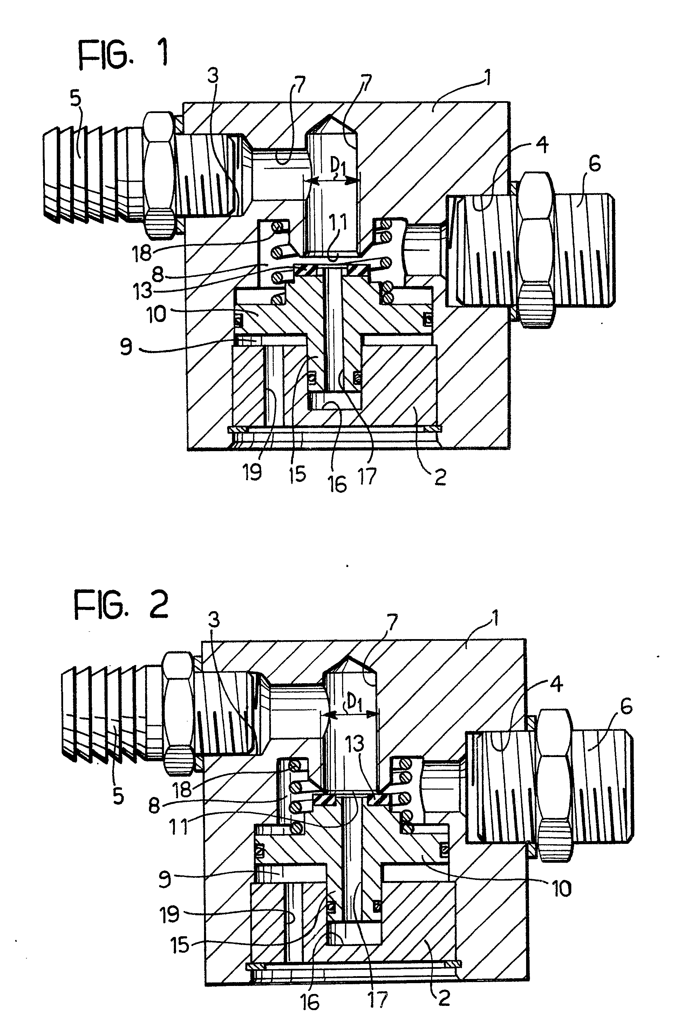

With reference to the drawings, a vacuum limiting device according to the invention includes a body which, in the embodiment illustrated in Figures 1 and 2, is constituted by an element 1 in which a cavity closed by an element, indicated 2, is formed.

First and second inlet apertures 3 and 4 are formed in the element 1 and respective connectors 5 and 6 are fixed therein. The connector 5 is intended for connection to a vacuum source, for example, a vacuum pump, whilst the connector 6 is intended for connection to the environment in which the vacuum is to be limited, for example, a reservoir or other user device.

The aperture 3 communicates with the chamber defined between the elements 1 and 2 of the body through an elbow duct 7. The chamber is divided into two regions 8 and 9 by a piston 10 which is sealingly slidable therein. The regions 8 and 9 are sealed from each other.

An annular valve seat 11 is formed in the region 8 around the mouth of the duct 7. Moreover, a duct 12 communicating with the aperture 4 opens into the side of the region 8.

An annular obturator 13 carried by the piston 10 is associated with the valve seat 11. At its end opposite the seat 11, the piston 10 has a longitudinal cylindrical appendage 15 which is sealingly slidable in a cylindrical recess 16 defined in the element 2. This recess and the appendage 15 of the piston have diameters smaller than those of the regions 8 and 9.

An axial passage 17 is formed in the piston 12 and extends within the end of the piston facing the seat 11 as far as the appendage 15, and opens into the recess 16. The obturator 13 is carried externally of this passage.

The inside diameter of the valve seat 11 (indicated $D_1$ in the drawings) is conveniently equal to or even a little greater than the diameter of the recess 16 and of the appendage 15 of the piston 10.

A helical spring, indicated 18, is arranged in the manner shown in the drawings and biasses the piston 10 away from the valve seat 11.

The region 9 communicates permanently with the atmosphere through a passage 19 formed in the element 2.

The device described above operates in the following manner.

When the vacuum in the environment connected to the connector 6 of the device is less than the maximum predetermined value, the piston 10 is kept away from the valve seat 11 by the spring 18 which is opposed by the atmosphere pressure present in the chamber 9 and the vacuum present in the chamber 8 (Figure 1). When the vacuum in the chamber 8 reaches the threshold value, the piston 10 assumes the position shown in Figure 2, in which the obturator 13 is in contact with the valve seat 11. In this condition, the apertures 2 and 4 of the device are disconnected from each other and the vacuum in the environment connected to the connector 6 cannot increase further. In the condition shown in Figure 2, the effect of the vacuum which acts on the upper end face of the piston 10 through the duct 7 is counterbalanced by the effect of the same vacuum on the lower end face of the appendage 15 of the piston and, if the diameter of the valve seat is equal to that of the recess 1, the vacuum generated by the source coupled to the connector 5 does not have any effect on the piston 10.

As soon as the vacuum in the environment connected to the connector 6 falls below the threshold value, the spring 18 moves the piston 10 down again and removes the obturator 13 from the valve seat 11.

As stated above, the device according to the invention enables the vacuum in an environment to be limited without the need to put the environment into communications with atmosphere for that purpose.

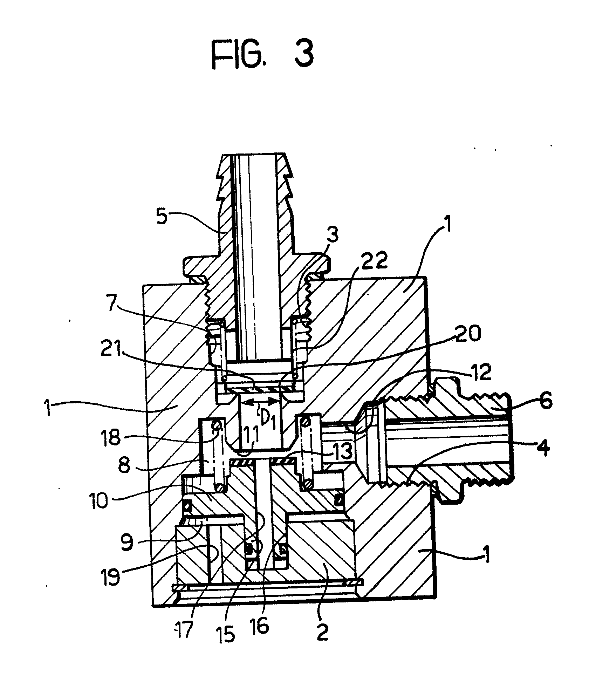

In Figure 3 there is illustrated another embodiment. In said figure the parts which have already been previously described have been attributed the same reference numerals previously used.

With reference to Figure 3, in the portion of the duct upstreams of the valve seat 11 there is defined another valve seat indicated 20. An obturator element 21 cooperates with the latter seat, under the action of a helicoidal spring 22 which urges it against said seat. The spring 22 has an end which reacts against an abutment predisposed in the input connector 5.

The seat 20, the obturator 21 and the spring 22 define, as a whole, a check valve.

The device illustrated in Figure 3 operates normally as already described above with reference to Figures 1 and 2.

If in the operation a failure or a vacuum leakage occurs upstreams of the input connector 5 or between said connector and aperture 3 of the body 1, spring 22 intervenes bringing the obturator 21 against valve seat 20, disconnecting the chamber 8 and the output connector 6 from the input aperture 3. In this way a vacuum leakage from the environment connected to the output connector is avoided.

**Claims**

1. A vacuum limiting device, characterised in that it includes a body (1, 2) with first and second apertures (3, 4) which can communicate with each other through a chamber (8, 9) defined in the body (1, 2) and are intended to be connected to a vacuum source and to an accumulator or vacuum-using device respectively, and with a third aperture (19) through which the chamber (8, 9) communicates with the atmosphere; an on-off valve (11, 13) being provided in the chamber (8, 9) for interrupting the communication between the first and second apertures (3, 4) of the body, the valve comprising a seat (11) and a movable obturator (13) controlled by an operating piston (10) which is sealingly slidable in the chamber (8, 9) and sealingly separates the first and second apertures (3, 4) from the third aperture (19) of the body, the operating piston (10) being adapted to close the valve (11, 13) against the action of resilient biassing means (18) which tend to open the valve (11, 13), when the vacuum applied to the second aperture (4) exceeds a predetermined value.

2. A device according to Claim 1, characterised in that the obturator (13) is fast with the operating piston (10).

3. A device according to Claim 1 or Claim 2, characterised in that the seat (11) is formed around a duct (7) communicating with the first aperture (3) and is coaxial with the operating piston (10), and in that the second aperture (4) opens into the side of the chamber (8, 9).

4. A device according to Claim 3, characterised in that the end of the operating piston (10) opposite the seat (11) has an appendage (15) which is sealingly slidable in a small-diameter cylindrical recess (16) defined in a wall (2) of the chamber (8, 9), a longitudinal passage (17) being formed in the piston (10) and extending into the appendage (15) from the end of the piston which faces the seat (11); the obturator (13) of the valve (11, 13) having an annular shape and being carried by the piston (10) around the passage (17), so that the first aperture (3) of the body communicates with the recess (16) through the passage (17) even when the valve (11, 13) is in the closed condition.

5. A device according to Claim 4, characterised in that the cylindrical recess (16) has a diameter equal to or less than the internal diameter of the seat (11) of the valve (11, 13).

6. A device according to any one of the preceding claims, characterised in that the resilient means comprise a helical spring (18) arranged in the chamber (8, 9) between the piston (10) and the region surrounding the seat (11) of the valve (11, 13).

7. A device according to any of the preceding claims, characterised in that upstreams of said on-off valve (11, 13) there is provided a check valve (20, 21, 22) capable of interrupting the communication between said first aperture (3) and the chamber (8) when the difference between the values of the vacuum upstreams and, respectively, downstreams of the check valve (20, 21, 22) falls below a predetermined minimum value.

8. A device according to Claim 7, characterised in that said check valve is of the kind including a seat (20), an obturator (21) and resilient reaction means (22) adapted to urge said obturator (21) towards the seat (20).

**FIG. 1**

**FIG. 2**

# FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A- 663 624 (WESTINGHOUSE)<br>* Page 2, line 81 - page 3, line 9; figure * | 1,3 | B 60 T 13/46<br>B 60 T 17/02<br>F 16 K 17/04 |
| A | DE-C- 820 654 (BOSCH)<br>* Page 2, lines 13-56; figures 1,2 * | 1 | |
| A | US-A-4 328 669 (MORT)<br>* Column 2, lines 42-68; figure 2 * | 1 | |

TECHNICAL FIELDS
SEARCHED (Int. Cl.4)

B 60 T 13/00
B 60 T 17/00
F 16 K 17/00

The present search report has been drawn up for all claims

| Place of search | Date of completion of the search | Examiner |
|---|---|---|
| THE HAGUE | 12-06-1989 | HARTEVELD C.D.H. |